# EUROPÄISCHE PATENTSCHRIFT

(11) **EP 2 944 175 B1**
(45) Veröffentlichungstag und Bekanntmachung des Hinweises auf die Patenterteilung: **17.04.2019**
(21) Anmeldenummer: 15401037.5
(22) Anmeldetag: 05.05.2015
(51) Int. Cl.: A01B 79/00, A01C 21/00, A01C 17/00

(54) **VERFAHREN ZUM AUSBRINGEN VON DÜNGEMITTELN**
METHOD FOR DISTRIBUTING FERTILISER
PROCÉDÉ D'ÉPANDAGE D'ENGRAIS

(30) Priorität: 14.05.2014 DE 102014106771
(43) Veröffentlichungstag der Anmeldung: 18.11.2015
(60) Teilanmeldung: 19157354.2
(73) Patentinhaber: Amazonen-Werke H. Dreyer GmbH & Co. KG, 49205 Hasbergen (DE)
(72) Erfinder: Fröschle, Heike, 49124 Georgsmarienhütte (DE)

(56) Entgegenhaltungen:
- EP-A1- 2 868 183
- WO-A1-2009/045114
- WO-A1-2012/142395
- DE-A1- 19 835 487
- US-B1- 6 216 614

## Beschreibung

Die vorliegende Erfindung betrifft ein Verfahren zum Ausbringen von Düngemittel gemäß dem Oberbegriff des Patentanspruchs 1.

Mit GPS-unterstützten Spurführungssystemen können Landwirte bereits heute ihre Schlepper zentimetergenau in der Spur halten, um granulierte Betriebsmittel, wie Düngemittel oder Saatgut, als auch flüssige Betriebsmittel, wie Gülle oder Düngemittel, nach einer Applikationskarte exakt auf dem landwirtschaftlichen Feld auszubringen. Zudem werden Überlappungen beim Überfahren der Felder vermieden, wodurch weniger Betriebsmittel und Energie verbraucht werden und somit weniger Umweltbelastungen entstehen.

Mittlerweile werden auch die modernen Düngerstreuvorrichtungen zusätzlich mit GPS-Technik entwickelt. Solche Düngerstreuvorrichtungen umfassen üblicherweise einen Vorratsbehälter, der auf einem an einem Fahrzeug, insbesondere einer landwirtschaftlichen Zugmaschine wie einem Traktor, anhängbaren/anbaubaren (Fahr-) Gestell angeordnet ist, wobei der Vorratsbehälter mit wenigstens einem über ein Dosierorgan (z. B. Dosierschieber) einstellbaren Auslauf versehen ist. Aus diesem Auslauf tritt das Düngemittel im Fallstrom jeweils strahlartig aus und wird einer unterhalb des Bodens des Vorratsbehälters angeordneten Schleuderscheibe, deren Drehachse gegenüber dem Auslaufschacht jeweils nach außen versetzt ist, zugeführt. Jede Schleuderscheibe weist mehrere Wurfschaufeln auf, die sich vom Zentrum der Schleuderscheibe nach außen erstrecken. Bei Rotation der Schleuderscheiben erfassen die Wurfschaufeln die Düngemittelpartikel und schleudern diese jeweils über einen fächerförmigen Streubereich ab. Die GPS-Technik ermöglicht es dabei diesen Schleuderstreuern, die ausgebrachte Menge des Düngemittels auf jeder Teilfläche des landwirtschaftlichen Feldes bedarfsgerecht zu gestalten.

Beispielsweise kann das im Auslauf angeordnete Dosierorgan, welches den Düngemittelvorratsbehälter mit der Schleuderscheibe koppelt, über eine entsprechende Antriebsvorrichtung verfügen, die wiederum mit einer elektronischen Steuerung verbunden ist. Diese kann die Beaufschlagung der Schleuderscheibe in Abhängigkeit von Parametern wie der auszubringenden Masse pro Flächeneinheit (der so genannten Applikationsrate), einer Streubreite sowie einer Fahrtgeschwindigkeit und weiteren Parametern steuern bzw. regeln. Eine derartige elektronische Steuerung kann GPS-gestützt sein. Diesen vorteilhaften technischen Effekt macht man sich insbesondere dann zu Nutze, wenn das zu behandelnde landwirtschaftliche Feld ungleichförmig (z. B. keilförmig) angelegt wurde, was in der modernen Landwirtschaft keine Seltenheit darstellt.

Beispielsweise zeigt die DE 198 35 487 A1 ein Verfahren zum Betreiben eines Schleuderstreuers, bei welchem auf Basis von GPS-Informationen die Schleuderscheibendrehzahl derart verändert wird, dass die Arbeitsbreite des Schleuderstreuers an die Gegebenheiten des Feldes angepasst wird.

Zudem erlaubt es die GPS-Technik dem modernen Landwirt, bereits am Vortag vom heimischen Computer aus Applikationskarten zu erstellen, mit denen am nächsten Tag gearbeitet werden soll. Softwareprogramme helfen dabei, die richtige Menge Düngemittel zu erfassen und die Wege so zu gestalten, dass mit möglichst wenig Zeit- und Ressourcenaufwand gearbeitet werden kann. Die erstellten Applikationskarten können dann über eine entsprechende Schnittstelle, z. B. online, per USB- oder Bluetooth-Anbindung, innerhalb weniger Sekunden auf eine vorzugsweise als Bordcomputer ausgebildete zentrale Rechnereinheit (die direkt an der Streueinrichtung oder am Fahrzeug angebracht ist) hochgeladen werden, sodass anschließend in Abhängigkeit vom GPS-erfassten und ebenfalls an den Bordcomputer übermittelten Standort die Ausbringmenge an Düngemittel wie vorgeschrieben angesteuert bzw. geregelt werden kann.

Um Gewässer einschließlich der darin lebenden Organismen vor Düngemitteleinträgen und damit verbundenen möglichen negativen Einflüssen (z. B. "Umkippen" des Gewässers aufgrund zu vieler Nährstoffe, sog. Eutrophierung) zu schützen, ist der überwiegende Teil zugelassener Düngemittel mit entsprechenden gesetzlichen Abstandsauflagen versehen, die in der Regel bußgeldbewehrt sind. Grundsätzlich regelt die Düngeverordnung (§ 3 DüV), dass für alle Düngemittel mit wesentlichen Nährstoffgehalten an Stickstoff (> 1,5 % ges. N in TM) und Phosphat (> 0,5 % P₂O₅ in TM) auf allen Flächen ein Drei-Meter-Abstand zum Gewässer (Böschungsoberkante) eingehalten und ein direkter Eintrag vermieden werden muss, wobei ein Abstand von einem Meter nur bei Einsatz von Geräten mit genauer Platzierung (z. B. Schleppschlauch, Mineraldüngerstreuer mit Grenzstreueinrichtung) ausreichend ist.

Zur Einhaltung der gesetzlich vorgegebenen Mindestabstände zu Oberflächengewässern (wie Bachläufe, Entwässerungsgräben, Vorfluter u. Ä.) war der Landwirt bisher auf Erfahrung und Augenschein angewiesen, um bis zu dem jeweiligen Gewässer-Mindestabstand ein gleichmäßiges Ausbringen des Düngemittels erreichen zu können. Augenschein und Erfahrungswerte sind jedoch nicht dazu geeignet, um eine exakte und zuverlässige Einhaltung der gesetzlich geforderten Abstände gewährleisten zu können.

Demzufolge tritt im Grenzbereich zwischen landwirtschaftlichem Feld und Oberflächengewässer regelmäßig die Problematik auf, dass der unbehandelte, nicht mit Düngemittel bestreute Randstreifen des Feldes, den gesetzlich vorgegebenen Mindestabstand unterschreitet oder überschreitet. Eine Unterschreitung hat eine Gefährdung oder gar Schädigung des Gewässers und für den Landwirt gegebenenfalls eine empfindliche Geldbuße zur Folge, während eine Überschreitung zu einem hohen Ernteverlust als Folge der unnötigerweise ungedüngt gebliebenen Feldrandfläche führen kann.

Es ist daher die Aufgabe der vorliegenden Erfindung, ein Verfahren zum Ausbringen von Düngemittel auf ein landwirtschaftliches Feld bereitzustellen, mit welchem die gesetzlichen Abstandsauflagen zum Schutz von Gewässern zuverlässig eingehalten werden können, ohne dass dadurch unnötige Ernteverluste erzeugt werden.

Zur Lösung dieser Aufgabe wird ein Verfahren zum Ausbringen von Düngemittel auf ein landwirtschaftliches Feld mittels einer einem Fahrzeug zugeordneten Streuvorrichtung bereitgestellt, wobei während dem Ausbringen von Düngemittel Orts- bzw. Positionsdaten des Fahrzeugs insbesondere mittels eines Satellitennavigationssystems erfasst und an eine vorzugsweise als Bordcomputer ausgebildete Rechnereinheit übermittelt werden. Hierbei ist die Streuvorrichtung als Schleuderstreuer mit wenigstens zwei rotatorisch angetriebenen Schleuderscheiben ausgebildet, wobei das Düngemittel jeweils der rotierenden Schleuderscheibe aus einem Vorratsbehälter über wenigstens ein Dosierorgan dosiert aufgegeben wird. Weiter sind Orts- bzw. Positionsdaten zumindest eines Gewässers in der Rechnereinheit hinterlegt und bei Erreichen und Unterschreiten eines vorgegebenen Abstandes zwischen dem Streufächer der Streuvorrichtung und dem Gewässer wird die Betriebsweise der Streuvorrichtung von der Rechnereinheit derart gesteuert bzw. geregelt, dass eine Anpassung und / oder Reduzierung des Ausbringens von Düngemittel durchgeführt wird, um das Gewässer nicht mit Düngemittel zu belasten. Zur Einhaltung der Gewässerabstandsvorgaben ist die Streuvorrichtung mit einer Randstreueinrichtung ausgerüstet, welche als eine aus mehreren Leitplatten aufgebaute Abschirmung gestaltet ist, wobei bei Erreichen und Unterschreiten des vorgegebenen Abstandes zum Gewässer die Betriebsweise der Streuvorrichtung von Normalstreuen auf Randstreuen umgeschaltet wird und diese Randstreueinrichtung automatisch aktiviert wird.

Die Entscheidung zur Anpassung und / oder Reduzierung der Düngemittelausbringung in Gewässernähe wird somit nicht mehr dem Augenmaß des Landwirtes überlassen, sondern wird automatisch mittels einer Rechnereinheit vorgenommen. Um den für das jeweilige Düngemittel gesetzlich vorgegebenen Abstand zum Gewässer exakt einhalten zu können, muss zum einen die Position des Fahrzeugs während der gesamten Applikationsfahrt bekannt sein. Hierbei ist es bevorzugt, dass die momentanen Positionsdaten des Fahrzeugs permanent mittels eines Satellitennavigationssystems, beispielsweise eines GPS (Global Positioning System), bestimmt und an den Bordcomputer gesendet werden.

Die Zuordnung der Streueinrichtung zum Fahrzeug kann dadurch erfolgen, dass die Streuvorrichtung an einem selbstfahrenden oder als Anhänger ausgebildeten Fahrzeug angebracht ist oder dass die Streuvorrichtung in Form einer an ein Fahrzeug angebauten (wahlweise auch mit Erweiterungen, wie beispielsweise einem zusätzlichen zentralen Düngemittelvorratsbehälter versehenen) Streuvorrichtung ausgebildet ist.

Zum anderen müssen die Positionsdaten des oder der an das landwirtschaftliche Feld angrenzenden Gewässer in der Rechnereinheit hinterlegt sein. Aus der aktuellen Position des Fahrzeugs im Feld und aus der hinterlegten Position des Gewässers kann somit punktgenau ermittelt werden, wann der Streufächer der am Fahrzeug angebrachten Streuvorrichtung den gesetzlich vorgegebenen Mindestabstand zum Gewässer erreicht bzw. unterschreitet.

Zum Schutz der Oberflächengewässer vor Nährstoffeinträgen sind nach Düngeverordnung (§ 3 Abs. 6 und 7 DüV) in Abhängigkeit von Hangneigung und Applikationstechnik Mindestabstände bei der Ausbringung von Düngemitteln zwischen dem Rand der durch die Arbeitsbreite bestimmten Ausbringungsfläche und der Böschungsoberkante des Oberflächengewässers einzuhalten. Gemäß DüV ist beim Aufbringen von Düngemitteln, Bodenhilfsstoffen, Kultursubstraten und Pflanzenhilfsstoffen mit wesentlichen Nährstoffgehalten (mehr als 1,5 % N oder 0,5 % P₂O₅ in der Trockenmasse TM) auf allen an oberirdischen Gewässern angrenzenden Flächen dafür zu sorgen, dass kein Abschwemmen in diese Gewässer erfolgt. Direkte Einträge von Nährstoffen in oberirdische Gewässer sind durch Einhaltung eines Abstandes von mindestens drei Metern zwischen dem Rand der Ausbringungsfläche und der Böschungsoberkante zu vermeiden. Ein Abstand von mindestens einem Meter genügt, wenn Geräte verwendet werden, deren Streubreite der Arbeitsbreite entspricht (d. h. eine exakte Querverteilung ist ohne Überlappung sichergestellt) oder die über eine Grenzstreueinrichtung verfügen. Bei starker Hangneigung (über 10%) sind 20 m Abstand einzuhalten (10 m bei sofortiger Einarbeitung).

Die Bundesländer dürfen jedoch in ihren jeweiligen Landeswassergesetzen von den Regelungen des Bundes abweichen und strengere Abstandsvorgaben festlegen. Nach Sächsischem Wassergesetz (§ 50 Abs. 3 SächsWG) ist beispielsweise die Ausbringung von Düngemitteln innerhalb von fünf Metern des Gewässerrandstreifens verboten. Dieser beginnt laut § 50 Abs. 2 SächsWG im Unterschied zur DüV jedoch bereits ab Uferlinie. Dies bedeutet, dass bei Hangneigungen < 10 % je nach Böschungslänge (Uferlinie bis Böschungsoberkante) Sicherheitsabstände von mindestens fünf Metern bis acht Metern einzuhalten sind.

Bei einem detektierten Erreichen und Unterschreiten des gesetzlich vorgegebenen (z. B. in der DüV oder den Landeswassergesetzen festgelegten) Mindestabstandes zum Gewässer schaltet die zentrale Rechnereinheit die Streuvorrichtung automatisch auf eine Betriebsweise um, die zur Einhaltung des Gewässerschutzes ein angepasstes und / oder reduziertes Ausbringen des Düngemittels gewährleistet. Gegenüber einem manuellen, allein auf Sicht kontrollierten Umschalten durch den Maschinenbediener (z. B. Landwirt) bietet das automatische Umschalten durch die Rechnereinheit den Vorteil, dass das Düngemittel exakt (randscharf) bis an den gesetzlich vorgegebenen Abstand zum Gewässer appliziert werden kann, ohne dass dieser Abstand überschritten oder unterschritten wird, wodurch eine effiziente, aber zugleich umweltschonende Ausbringung des Düngemittels an Feldrandgrenzen ermöglicht wird. Das Verfahren stellt somit die Einhaltung von Abstandsvorgaben sicher und erleichtert dem Landwirt die Tätigkeit der Düngemittelapplikation derart, dass ein risikobehaftetes manuelles Umschalten nach Erfahrungswerten entfällt.

Die Anpassung und / oder Reduzierung der Düngemittelausbringung erfolgt dadurch, dass bei Erreichen und Unterschreiten des vorgegebenen Abstandes zum Gewässer die Betriebsweise der Streuvorrichtung von Normalstreuen auf Randstreuen umgeschaltet wird.

Dabei wird das Streugut (Düngemittel) durch horizontal rotierende und mit Wurfschaufeln besetzte Streuscheiben verteilt. Die Umlaufgeschwindigkeit der Streuscheiben beeinflusst die Wurfweite, mit der die Streuprodukte ausgebracht werden können. Beim Ausbringen von Düngemitteln besteht die Notwendigkeit, diese gleichmäßig auf die vorgesehene Fläche zu verteilen. Dabei wird zwischen dem Normalstreuen und dem Randstreuen unterschieden. Im Gegensatz zu einem regulären Streufächer mit symmetrischem Streuwinkel und beidseitig großen Wurfweiten wird beim Randstreuen ein asymmetrischer Streuwinkel mit einseitig deutlich verkürzter Wurfweite erzeugt.

Im Fall eines Zweischeiben-Schleuderstreuers arbeitet die dem Feldrand abgekehrte Schleuderscheibe im Normalbetrieb weiter, während nur die feldrandnahe Schleuderscheibe mit einer kürzeren Wurfweite bei einem gleichzeitig anderen Streubild arbeitet. Somit wird zum Feldinneren hin das Streubild nicht verändert und die Streubreite bleibt somit feldinnenseitig unverändert groß, um die beim Befahren der Feldfahrgassen regulär erzeugte Streugutverteilung zu einer gleichmäßigen Streugutverteilung zu ergänzen. Zum Feldrand hingegen ist der Streuwinkel deutlich verkleinert. Hierdurch wird das Streubild auf dieser Seite begrenzt und praktisch randscharf abgeschnitten. Somit erlaubt der asymmetrische Streuwinkel der Streuvorrichtung eine randscharfe Behandlung der gesetzlich vorgegebenen Abstandsgrenze. Der Streubereich, d. h. die Streubreite und somit der Austrag über die gesetzlich vorgegebene Abstandsgrenze werden auf diese Weise deutlich reduziert.

Die Einhaltung von Abstandsvorgaben wird erfindungsgemäß durch Verwendung einer Randstreueinrichtung, die Leitplatten zur einseitigen Reduzierung der Streubreiten und Änderung des Streubildes aufweist, sichergestellt, indem je nach Position des Fahrzeugs diese Leitplatten automatisch in den Streufächer (genauer: in den Streufächer einer dem Feldrand zugeordneten Schleuderscheibe) eingebracht werden. Bei dieser Randstreueinrichtung werden die von der feldrandnahen Schleuderscheibe abgeschleuderten Düngerpartikel durch die als Bremsplatten ausgebildeten Leitplatten abgebremst. Die Abbremsung der abgeschleuderten Düngerpartikel ist so stark, dass sie nicht über die Feldrandgrenze hinaus fliegen. Beim Einbringen der Randstreueinrichtung wird der Streufächer somit nach einer Seite deutlich verkleinert. Indem dieses Einbringen der Randstreueinrichtung automatisiert abläuft, wird dem Landwirt die Düngemittelapplikation deutlich erleichtert, da ein aufwendiges manuelles Zuschalten der Randstreueinrichtung (evtl. mit Zwischenstopps) entfällt. Zudem muss durch die automatische Aktivierung der Randstreueinrichtung bei Erreichen / Unterschreiten des geforderten Mindestabstandes zum Gewässer keine komplette oder teilweise Abschaltung der Arbeitsbreite durchgeführt werden, welche zu Fehlstellen in der Düngemittelapplikation und somit zu Ertragsminderungen führen kann.

Da Gewässer zumeist unregelmäßig geformt sind, lässt sich durch eine flexible Regelung der Arbeitsbreite der Streuvorrichtung gewährleisten, dass kein Düngemittel innerhalb des gesetzlich geschützten Mindestabstandes zum Gewässer ausgebracht wird. Im Falle eines Zweischeiben-Schleuderstreuers kann zusätzlich zum erfindungsgemäßen Verfahren lediglich einseitig die Schleuderscheibe abgeschaltet werden, deren Streufächer entweder ganz innerhalb des geforderten Mindestabstandes zum Gewässer liegt oder zumindest teilweise in diesen Mindestabstand hineinragt, sodass eine Verletzung der Abstandsauflagen sicher ausgeschlossen werden kann. Befindet sich die gesamte Streueinrichtung (über ihre gesamte Arbeitsbreite) innerhalb des geforderten Mindestabstandes zum Gewässer, muss die Streuvorrichtung komplett abgeschaltet werden, um zu gewährleisten, dass kein Düngemittel in diesen geschützten Gewässerrandstreifen eingetragen wird.

Beim Erreichen / Unterschreiten des Mindestabstandes zum Gewässer erkennt die Rechnereinheit mit Hilfe der aktuellen GPS-Koordinaten diejenigen Schleuderscheiben, welche den Mindestabstand von der Gewässergrenze nicht einhalten und schaltet diese automatisch ab. Erreicht das Fahrzeug eine Position, bei der sich der von der vormals abgeschalteten Schleuderscheibe erzeugte Streufächer wieder vollständig außerhalb des geschützten Mindestabstandes zum Gewässer befindet, dann wird die Düngermittelzufuhr zu dieser Schleuderscheibe wieder geöffnet, bis schließlich eine Fahrzeugposition erreicht ist, bei der die gesamte Arbeitsbreite der Streuvorrichtung wieder zur Verfügung steht.

Hierdurch wird die Einhaltung der Abstandsvorgaben für den Gewässerschutz (wie beispielsweise in der sogenannten Düngeverordnung DüV festgesetzt) gewährleistet. Bei Verwendung eines Schleuderstreuers kann zusätzlich zum erfindungsgemäßen Verfahren durch das Ein- und Abschalten der Materialzuführung zu der jeweiligen Schleuderscheibe mittels einer dem jeweiligen Dosierorgan zugeordneten Einstellvorrichtung die Arbeitsbreite des Schleuderstreuers in Teilbreiten reduziert werden. Hierbei wird eine Grobeinstellung der Arbeitsbreite bzw. die Grobabstufung der Arbeitsbreite des Schleuderstreuers durch das Ein- und Abschalten der Dosierorgane erreicht, während eine Feineinstellung bzw. Feinabstufung der Arbeitsbreite auch mittels einer Drehzahlvariation der Schleuderscheiben durchgeführt werden kann. Diese Einstellungen können über die Rechnereinheit, in welcher die entsprechenden Funktionsdaten hinterlegt sind, vorgenommen werden.

Das zusätzlich zum erfindungsgemäßen Verfahren mögliche Abschalten der Streuvorrichtung bzw. das Abschalten einzelner Teilbreiten des Schleuderstreuers erfolgt in hochpräziser Weise, indem in der Rechnereinheit hinterlegte Applikationskarten genutzt werden und indem auf eine softwareseitig unterstützte Einzelschaltung der jeweils einer Schleuderscheibe zugeordneten Dosierorgane zurückgegriffen wird, mit der es möglich ist, einzelne oder mehrere Schleuderscheiben über eine intelligente Elektronik zu aktivieren / deaktivieren. Dank des optimalen Rechenalgorithmus, der die Lage des Gewässers, den hierzu vorgegebenen Abstand und dessen Überschneidung mit dem Feld berücksichtigt, wird eine präzise Applikation des Düngemittels durch die Streuvorrichtung ermöglicht, ohne dass es zu Ertragseinbußen oder Umweltbelastungen kommt.

Derartige Streuvorrichtungen können als selbstfahrende, gezogene oder angebaute Schleuderstreuer (Zentrifugalstreuer) von einem Ackerschlepper (Traktor) über das zu behandelnde Feld gezogen werden, wobei das zu verteilende Streugut bei diesen Schleuderstreuern in einem zentralen Vorratsbehälter geladen ist. Bei einem angebauten oder gezogenen oder selbstfahrenden Zweischeiben-Schleuderstreuer wird das Düngemittel in einem halbkreisförmigen Streufächer in einem großen Abstand vom Streuer, der der Wurfweite des Streuers entspricht, auf dem Boden verteilt. Dabei befindet sich das Maximum der Düngemittelmenge in der Mitte, während sie nach rechts und links im Halbkreis abfällt. Beim Anschlussfahren werden die Streufächer überlappt und eine gleichmäßige Düngerverteilung erreicht. Dies gilt für die Verteilung in parallelen Feldfahrgassen.

In einer weiteren bevorzugten Ausgestaltung des erfindungsgemäßen Verfahrens wird bei Erreichen und Unterschreiten des vorgegebenen Abstandes zum Gewässer durch die Randstreueinrichtung, welche als eine aus mehreren Leitplatten aufgebaute Abschirmung gestaltet ist, und eine Verstellung des Dosierorgans und / oder durch eine Verlagerung des Aufgabepunktes des Düngemittels auf die Schleuderscheibe ein in der Streumenge und / oder im Streubild angepasstes Ausbringen des Düngemittels erreicht, um das Gewässer nicht mit Düngemittel zu belasten.

Wenn der nach der Düngeverordnung DüV oder nach speziellen Landeswassergesetzen einzuhaltende Mindestabstand zum jeweiligen Oberflächengewässer erreicht oder unterschritten ist, werden die vorstehend beschriebenen Änderungen der Betriebsparameter des Schleuderstreuers durchgeführt, um die ausgebrachte Streumenge und / oder das erzeugte Streubild derart anzupassen, dass der neben dem Gewässer liegende Feldrandbereich so mit Düngemittel bestreut wird, dass kein schädlicher Düngemitteleintrag in das Gewässer erfolgt. Verlässt das Fahrzeug mit dem Schleuderstreuer den Feldrandbereich wieder, d. h. ist der Abstand zwischen Streufächer und Gewässer größer als der für das jeweilige Düngemittel geforderte Mindestabstand zum Gewässer, dann kann vom Randstreuen zurück auf eine für die Bestreuung des landwirtschaftlichen Feldes optimale symmetrische Streugutverteilung geschaltet werden (Normalstreuen).

Bei einer weiteren Ausführungsform des Verfahrens nach der Erfindung ist in der Rechnereinheit eine Applikationskarte vorgegeben, in welcher das zu behandelnde landwirtschaftliche Feld und die ausgebrachten und auszubringenden Düngemittelmengen abgespeichert sind.

Die vom Landwirt am Hof-Computer vorbereitete Applikationskarte wird auf das Prozesssteuerungssystem der mobilen, vorzugsweise als Bordcomputer ausgebildeten Rechnereinheit übertragen und kann dort zur Ausführung kommen. Die teilflächenspezifische Düngemittelausbringung erfolgt dabei automatisch, indem an jedem Punkt innerhalb des Feldes die Information der Applikationskarte umgesetzt wird. Die zentrale Rechnereinheit (Bordcomputer) umfasst hierzu ein software-gestütztes und datenbasierendes Entscheidungstool, mit dem die Entscheidung getroffen wird, ob gestreut werden soll und, falls ja, welches Düngemittel wie (d. h. mit welchen Betriebsparametern der Streuvorrichtung) gestreut werden soll. Diese Entscheidung wird vom Entscheidungstool anhand der an der jeweiligen Position in der Applikationskarte gespeicherten Informationen getroffen und in Abhängigkeit von der getroffenen Entscheidung werden dann über eine Elektronik die einzelnen Schaltelemente, die die Streuvorrichtung steuern, geöffnet bzw. geschlossen. Unabdingbar ist jedoch die Verfügbarkeit eines Ortungssystems, z. B. eines satellitengestützten Global Positioning Systems (GPS), um die jeweilige Teilfläche lokalisieren und die vorab berechnete Düngemittelmenge dort ausbringen zu können.

In einer weiter bevorzugten Ausführungsform umfasst das Verfahren die folgenden fünf Schritte: In einem ersten Schritt wird der vorgegebene Abstand zum jeweiligen Gewässer in die Rechnereinheit eingegeben, geladen oder eingelesen. In einem zweiten Schritt wird auf der Applikationskarte das Gewässer mittels eines Markierungspolygons approximiert. In einem dritten Schritt wird das Markierungspolygon um den vorgegebenen Abstand zum Gewässer erweitert zur Bildung eines erweiterten Polygons. In einem vierten Schritt wird eine Überschneidungslinie ermittelt, wo sich das erweiterte Polygon mit dem zu behandelnden landwirtschaftlichen Feld überschneidet. In einem fünften Schritt wird, sobald der Streufächer die Überschneidungslinie erreicht und überquert, die Streuvorrichtung von der Rechnereinheit automatisch derart gesteuert bzw. geregelt, dass eine Anpassung und / oder Reduzierung des Ausbringens des Düngemittels erreicht wird.

Insbesondere kann es sich bei dem Gewässer um ein stehendes oder nahezu stehendes Gewässer, wie einen See oder einen Teich, handeln, der durch ein Flächenpolygon als Markierungspolygon approximiert wird, oder aber es kann sich bei dem Gewässer um ein fließendes Gewässer, wie einen Fluss oder einen Bach, handeln, der durch ein Linienpolygon als Markierungspolygon approximiert wird.

Das Gewässer wird durch den Anwender auf der Karte mittels eines Polygons markiert. Dies kann je nach Art und Größe des Gewässers durch ein Flächen- oder Linienpolygon vorgenommen werden. Durch Erweiterung dieses Markierungspolygons um den Parameter der gesetzlichen Abstandsvorgabe von der Polygonumrandung (Außengrenze der Gewässerfläche) ausgehend kann der Pufferstreifen (Gewässerrandstreifen), auf welchem kein Düngemittel eingesetzt werden darf, in der Applikationskarte exakt bestimmt werden. Danach erfolgt die Berechnung der Schnittpunkte der um die Abstandsvorgabe erweiterten Polygonfläche bzw. -linie mit den Außenkanten des zu behandelnden landwirtschaftlichen Feldes. Die sich zwischen diesen Schnittpunkten innerhalb des Feldes erstreckende Überschneidungslinie des erweiterten Polygons bildet eine Führungslinie, bei deren Erreichen die Anpassung / Reduzierung der Düngemittelausbringung erfolgt. Die Anpassung / Reduzierung der Düngemittelausbringung kann im Falle einer als Schleuderstreuer ausgebildeten Streuvorrichtung z. B. durch eine Veränderung der Streumenge mittels Verstellung der Dosierorgane und / oder durch eine Veränderung der Streubreite mittels Verstellung des Aufgabepunktes des Streugutes auf die Schleuderscheibe und / oder mittels Änderung der Drehzahl des Schleuderscheibe verwirklicht werden. Ergänzend oder alternativ dazu kann eine Anpassung / Reduzierung der Düngemittelausbringung durch eine erfindungsgemäße Umschaltung der Streuvorrichtung auf Randstreuen erzielt werden, um eine vollständige (randscharfe) Düngung bis zur Feldrandgrenze zu erreichen.

Die Erfindung sieht in einer vorteilhaften Ausgestaltungsform vor, dass Profildaten des zu behandelnden Feldes, wie die Hangneigung, und / oder meteorologische Daten, wie die Windrichtung und / oder die Windstärke, in der Rechnereinheit hinterlegt sind, um ein daran angepasstes Ausbringen von Düngemittel zu erreichen.

Die Verteilung des Düngemittels hängt nicht nur von den Betriebsparametern der jeweiligen Streuvorrichtung (z. B. des Schleuderstreuers), sondern auch von äußeren Randbedingungen während der Düngemittelausbringung, wie z. B. vom Profil des zu behandelnden Feldes oder von den aktuellen meteorologischen Bedingungen, ab. Demzufolge ist es sinnvoll, auch diese äußeren Randbedingungen permanent zu erfassen und an die zentrale Rechnereinheit weiterzuleiten, um das Ausbringen des Düngemittels unter Berücksichtigung dieser äußeren Randbedingungen zusätzlich zu optimieren. Insbesondere ist es für die Bewertung der Abschwemmungsgefahr wichtig, die Hangneigung (z. B. durch Ablesen aus einer abgespeicherten Tabelle oder durch in-situ-Messung mit einem Gefällemesser) zu kennen, um die Ausbringung des Düngemittels (z. B. Streumenge und / oder Streubild) darauf abstimmen zu können. Zudem ist das Düngemittel bei seiner Ausbringung einer Abdrift ausgesetzt, die sich beispielsweise aufgrund herrschender meteorologischer Bedingungen, wie Temperatur, Windstärke, -richtung und Turbulenzen, ergibt. Um das Abdriftverhalten im Voraus zu ermitteln und daraufhin die Streuparameter zur Abdriftminimierung anpassen zu können, ist es vorteilhaft auch diese meteorologischen Daten permanent (z. B. durch manuelles Eingeben in die Rechnereinheit oder durch in-situ-Messung mittels einer entsprechenden Wetterstation) zu überwachen.

Nach einer weiteren bevorzugten Ausführungsform ist in der Rechnereinheit wenigstens ein zusätzliches Unterstützungsprogramm installiert, welches auf Basis von in die Rechnereinheit eingegebenen, geladenen oder eingelesenen Parametern die Streumenge und / oder das Streubild des Düngemittels neu einstellt und / oder verändert.

Hierzu wird zur Steuerung der Streuvorrichtung ein im Rahmen der Düngemittelapplikation bekanntes zusätzliches Unterstützungsprogramm (wie z. B. "Argus" oder "WindControl") eingesetzt, um dem Entscheidungstool der Rechnereinheit weitere Entscheidungsinformationen zuzuführen, anhand welchen entschieden wird, ob die jeweilige Streuvorrichtung an- bzw. ausgeschaltet oder auf eine andere Streugutverteilung (Streubreite und / oder Streumenge) eingestellt werden soll.

Hierzu kann der Nutzer im Voraus in das auf der zentralen Rechnereinheit zusätzlich installierte Unterstützungsprogramm entsprechende Parameter eingeben oder wahlweise aus einer Datenbank, einer Beratungseinheit oder einem Datenmanagementsystem (DMS) die Informationen beziehen, welche das jeweilige Unterstützungsprogram zur Berechnung der optimalen Streugutverteilung (Streubreite / Streumenge) benötigt. Die Streuvorrichtung kann hierzu beispielsweise mit einer Wetterstation ausgerüstet sein, die die momentan wirkenden Windverhältnisse in Stärke und Richtung im Bereich des Streufächers erfasst. Ein Verstellmechanismus, kombiniert mit einer Steuerungssoftware ("WindControl"), verändert die Schleuderscheibendrehzahlen und / oder die Düngeraufgabepunkte auf die Schleuderscheiben, um windbedingte Änderungen des Streufächers zu kompensieren. Das Programm fragt fortlaufend die momentan auf dem Feld vorhandenen Zusatzinformationen ab und gleicht diese Zusatzinformationen mit den im Programm hinterlegten Betriebsparametern der Streuvorrichtung ab. In Abhängigkeit dieses Abgleichs wird die entsprechend ideale / gewünschte Applikation des Düngemittels (hinsichtlich Streumenge und Streubild) eingestellt.

Weitere Vorteile und vorteilhafte Ausgestaltungen des erfindungsgemäßen Verfahrens ergeben sich aus der folgenden Zeichnungsbeschreibung. Die Zeichnungen zeigen in
Fig. 1 ein Blockdiagramm eines Systems zur Durchführung einer Ausführungsform des erfindungsgemäßen Verfahrens;
Fig. 2 und 3 schematische Darstellungen, welche die in einer Ausführungsform des erfindungsgemäßen Verfahrens durchgeführten Schritte zur Grenzlinienbestimmung verdeutlichen;
Fig. 4 und 5 schematische Darstellungen, welche die in einer weiteren Ausführungsform des erfindungsgemäßen Verfahrens durchgeführten Schritte zur Grenzlinienbestimmung verdeutlichen.

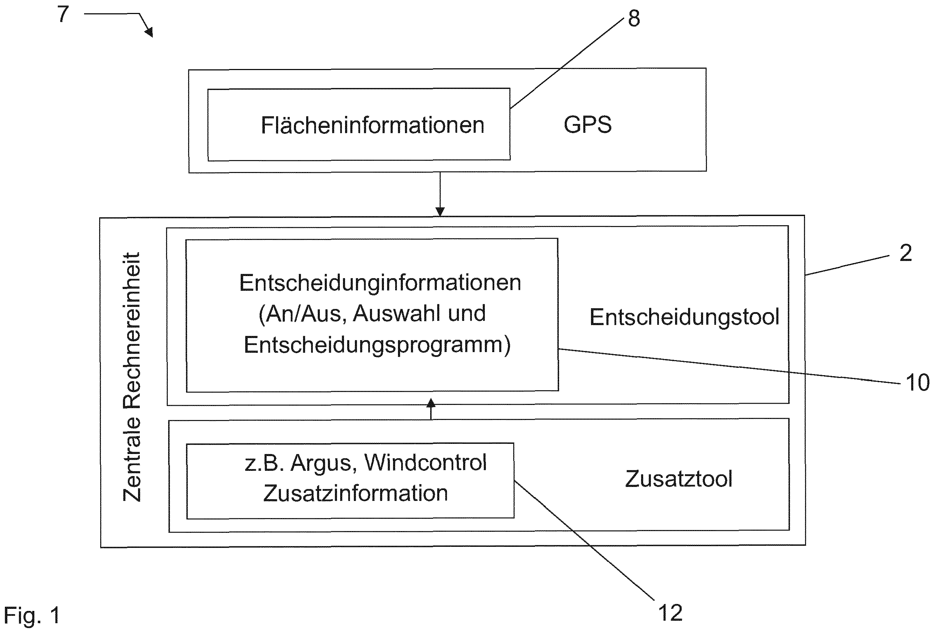

Die Fig.1 zeigt in schematischer Weise ein System 7, mit dem die bei der Ausbringung von Düngemitteln geforderten Abstandsvorgaben zu Oberflächengewässern präzise eingehalten werden können.

Zur Düngemittelapplikation wird das Streugut (Düngemittel) dabei vorzugsweise im Fallstrom strahlartig wenigstens einer um eine vertikale Achse umlaufenden Schleuderscheibe zugeführt. In Umlaufrichtung der Schleuderscheibe sind ein oder mehrere Wurfschaufeln angeordnet, die sich radial zum Umfang der Schleuderscheibe hin ausdehnen und die zugeführten Düngerpartikel über einen fächerförmigen Streubereich abschleudern, sodass der Dünger in gleich-mäßiger Weise auf der Bodenoberfläche verteilt wird.

Im ersten Schritt des erfindungsgemäßen Verfahrens werden Schlaginformationen (d.h. Informationen betreffend die landwirtschaftlich zu bearbeitende Feldfläche 1) aufgezeichnet bzw. werden bereits vorhandene Schlaginformationen in die zentrale Rechnereinheit 2 geladen. Dies kann auf verschiedene Art und Weise geschehen: Zum Beispiel kann der Feldumriss durch Umfahren eine Schlages GPS-gestützt aufgezeichnet werden und / oder eine Karte kann aus einer frei zugänglichen Online-Kartenquelle (wie Google Maps oder OpenStreetMaps) runtergeladen werden. Alternativ kann das Kartenmaterial des Schlages aus einem Datenmanagementsystem DMS (beispielsweise Farmnet365) oder einem FMlS System bezogen und in die zentrale Rechnereinheit geladen werden.

Als nachfolgender Schritt muss zunächst eine gewässerseitige "Grenzlinie" festgelegt werden, bis zu welcher das jeweilige Düngemittel ungestört auf das landwirtschaftliche Feld 1 ausgebracht werden darf, ohne dass ein Eintrag in das jeweilige Gewässer 3a, 3b erfolgt. Bei dem in Fig. 1 dargestellten System 7 werden zur Festlegung der "Grenzlinie" durch GPS gewonnene Flächeninformationen 8 in eine zentrale Rechnereinheit 2 eingelesen.

Stattdessen ist es jedoch auch möglich, die "Grenzlinie" für die Düngemittelapplikation nicht "online" auf dem Feld 1 per GPS, sondern "offline" (d. h. vor Beginn der Applikation) in einer Applikationskarte 9 oder in einer Karte anderer Art festzulegen. In jedem Fall müssen aber die aktuellen Orts- bzw. Positionsdaten des zur Ausbringung des Düngemittels dienenden Fahrzeugs mittels GPS oder eines anderen Lokalisierungssystems permanent erfasst und ausgewertet werden, um zu bestimmen, ob der Streufächer die festgelegte "Grenzlinie" erreicht bzw. überquert hat. Ist dies der Fall, wird von einem in der zentralen Rechnereinheit 2 integrierten Entscheidungstool 10 die Entscheidung getroffen, die Arbeitsbreite der Streuvorrichtung mit dem erfindungsgemäßen Verfahren oder wahlweise zusätzlich z.B. durch Abschaltung einzelner Schleuderscheiben bzw. der Düngemittelzufuhr zu einzelnen Schleuderscheiben zu reduzieren oder die Streuvorrichtung ganz abzuschalten.

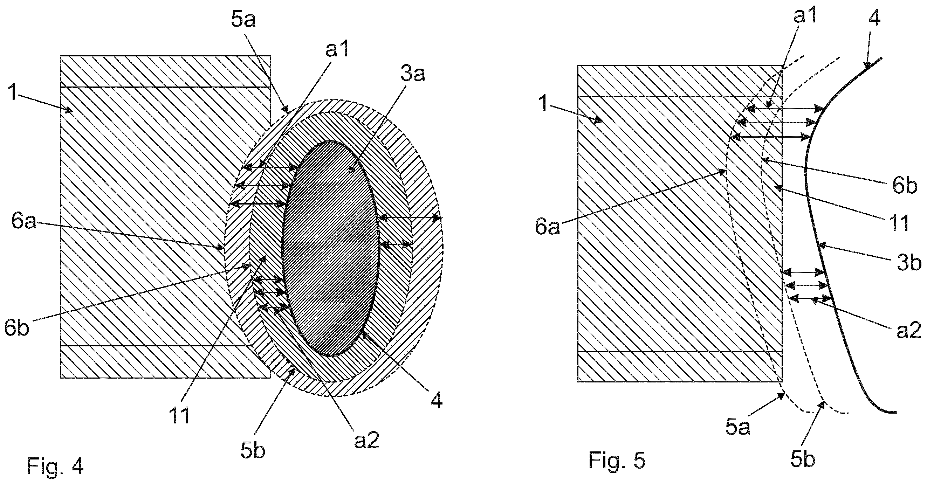

Erfindungsgemäß (gegebenenfalls - wie in Fig. 4 und 5 gezeigt - vorbereitend) wird die Streuvorrichtung bei Erreichen und Überqueren der festgelegten "Grenzlinie" auf eine als "Randstreuen" bezeichnete Betriebsweise umgeschaltet. Die Umschaltung auf Randstreuen erfolgt mittels einer aktivierbaren Randstreueinrichtung. Im Fall eines Schleuderstreuers kann beispielsweise die Umschaltung auf Randstreuen durch ein Absenken der Drehzahl der zum Feldrand gerichteten Schleuderscheibe erfolgen, um so ein unsymmetrisches Streubild mit einer in einer Randzone steil abfallenden Streuflanke zur Feldgrenze zu erzielen. Eine Randstreueinrichtung gemäß dem erfindungsgemäßen Verfahren ist jedoch als eine aus mehreren Leitplatten aufgebaute Abschirmung gestaltet, die in den Streufächer der zum Feldrand gerichteten Schleuderscheibe einbringbar ist, um die ausgeschleuderten Düngerpartikel abzubremsen und so das Streubild randscharf einzustellen.

Diese vorgeschilderte An-, Ab- oder Umschaltung der Streuvorrichtung wird automatisch durch die Rechnereinheit 2 und die daran angeschlossenen Schaltelemente der Streuvorrichtung vorgenommen, wobei nicht nur die Entscheidung, wann, sondern auch die Entscheidung, wo und welche Betriebsparameter der Streuvorrichtung verändert oder neu eingestellt werden, automatisch durch das in der Rechnereinheit 2 vorgesehene Entscheidungsprogramm erfolgt.

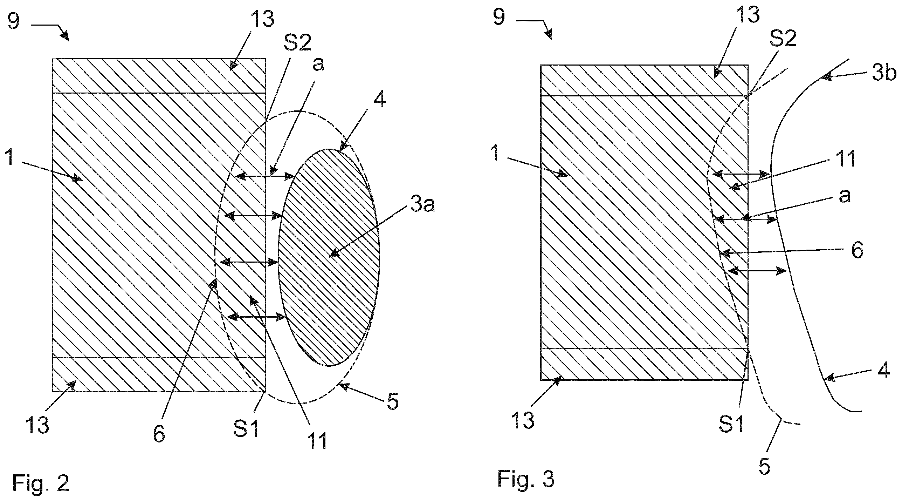

In den Fig. 2 und 3 ist gezeigt, wie die "Grenzlinie" zur Ab- / Umschaltung der Streuvorrichtung zwecks Einhaltung der Abstandsvorgaben zum Gewässerschutz durch Nutzung einer Applikationskarte 9 und mit softwareseitiger Unterstützung vor Beginn der Düngemittelapplikation automatisiert bestimmt werden kann. Anschließend kann die derart bestimmte "Grenzlinie" in eine Datei (z. B. in eine agroXML-Datei) eingefügt werden, die später vom Landwirt in die mobile Rechnereinheit 2 (Bordcomputer) des die Streuvorrichtung bewegenden Fahrzeugs geladen wird, sodass die "Grenzlinie" bei der Düngemittelapplikation automatisch berücksichtigt wird.

Eine Schlagkartei, in der das zu behandelnde landwirtschaftliche Feld 1 (einschließlich der Vorgewende 13) angegeben ist, wurde bereits aufgezeichnet bzw. ist bereits vorhanden und kann vom Nutzer in die zentrale Rechnereinheit 2 geladen werden. Zudem werden die aktuellen Orts- bzw. Positionsdaten des Fahrzeugs im Feld 1 während der Düngemittelausbringung (beispielsweise mittels GPS-Überwachung) permanent erfasst und in das auf der zentralen Rechnereinheit 2 installierte Entscheidungstool 10 übertragen.

Die für das jeweilige Düngemittel und für das jeweilige oberirdische Gewässer 3a, 3b einzuhaltenden gesetzlichen Abstandsvorgaben (nach Maßgabe der Düngeverordnung DüV oder nach Maßgabe sonstiger spezieller Landeswassergesetze) werden durch den Nutzer vorab in die zentrale Rechnereinheit 2 eingegeben und / oder über eine Datenverbindung in diese, beispielsweise aus einer zweckentsprechenden Datenbank, einem Beratungstool oder einem Datenmanagementsystem (wie z. B. Farmnet365), direkt oder schon vorbereitend geladen / übertragen. Auch die Art (z. B. Schleuderstreuer) und die Betriebsweisen der jeweils zur Düngemittelapplikation eingesetzten Streuvorrichtung werden vorab durch den Nutzer in die Rechnereinheit 2 eingegeben oder über eine Datenverbindung in diese, beispielsweise aus einer Datenbank, einem Beratungstool oder einem Datenmanagementsystem DMS (wie z. B. Farmnet365), direkt oder schon vorbereitend geladen / übertragen. Hierbei wird differenziert zwischen der Betriebsweise des verlustmindernden Randstreuens (mit einem asymmetrischen, zum Feldrand hin eine steil abfallende Streuflanke aufweisenden Streubild), die im Feldrandbereich 11 bei Erreichen und Unterschreiten des vorgegebenen Abstandes a zum Gewässer 3a, 3b verwendet wird, und der Betriebsweise des Normalstreuens (mit einem symmetrischen Streubild und beidseitig großer Wurfweite), die im Feldinneren verwendet wird, wo der Abstand zum gefährdeten Gewässer 3a, 3b größer als der gesetzlich vorgegebene Abstand a ist.

Optional kann in der zentralen Rechnereinheit 2 ein Zusatztool 12, welches beispielsweise im Rahmen der Düngemittelapplikation bekannte Unterstützungsprogramme (wie "Argus", "WindControl" ...) (vgl. Fig. 1) umfasst, installiert sein. Dieses Zusatztool 12 ist mit dem Entscheidungstool 10 verbunden und stellt zusätzliche Entscheidungsinformationen zur Verfügung, auf deren Basis entschieden wird, ob, und falls ja, welche Elemente der Streuvorrichtung (z. B. Schleuderscheiben und zugehörige Düngemittelzufuhr) zur Anpassung der Streubreite an- bzw. ausgeschaltet werden sollen oder ob zur Änderung der Streumenge und / oder des Streubildes andere Betriebsparameter der Streuvorrichtung (z. B. der Aufgabepunkt des Düngemittels auf die Schleuderscheibe, die Drehzahl der Schleuderscheibe, die Zuführrate des Düngemittels zur Schleuderscheibe) neu eingestellt werden sollen.

Ausgehend vom vorgeschilderten anfänglichen Verfahrensablauf wird die Ermittlung der "Grenzlinie" nun wie folgt erreicht (vgl. Fig. 2 und 3):
Zunächst wird das an das zu behandelnde landwirtschaftliche Feld 1 angrenzende Oberflächengewässer 3a, 3b durch den Nutzer auf der Applikationskarte 9 mittels eines Markierungspolygons 4 markiert. Diese Approximation kann je nach Art und Größe des Gewässers 3a, 3b durch ein Flächenpolygon (im Fall eines stehenden oder nahezu stehenden Gewässers 3a, wie eines Sees oder eines Teiches, vgl. Fig. 2) oder durch ein Linienpolygon (im Fall eines fließenden Gewässers 3b, wie eines Flusses oder eines Bachs, vgl. Fig. 3) erfolgen. Falls im Kartenmaterial die betreffenden Bereiche bereits vorab markiert sind, muss lediglich die im nachfolgenden beschriebene Erweiterung dieses markierten Bereiches vorgenommen werden, um den geschützten Gewässerrandstreifen bzw. die "Grenzlinie" zu ermitteln.

Anschließend erfolgt die Erweiterung des Markierungspolygons 4 um den bereits vorab vom Nutzer in die zentrale Rechnereinheit 2 eingegebenen / geladenen Parameterwert (Abstand a) der gesetzlichen Abstandsvorgabe. In den Fig. 2 und 3 ist diese Verschiebung der das Gewässer 3a, 3b umrandenden Polygongrenze um die gesetzliche Abstandsvorgabe durch Doppelpfeile, die den gesetzlich vorgegebenen Mindestabstand a symbolisieren, verdeutlicht.

Als Ergebnis der Ausdehnung des Markierungspolygons 4 wird ein erweitertes Polygon 5 erzeugt, das teilweise in die Fläche des zu behandelnden landwirtschaftlichen Feldes 1 ragt. Es erfolgt die Berechnung der Schnittpunkte S1, S2 zwischen dem erweiterten Polygon 5 und den Außenkanten des zu bearbeitenden landwirtschaftlichen Feldes 1. Das sich zwischen diesen Schnittpunkten S1, S2 erstreckende und im landwirtschaftlichen Feld 1 liegende Liniensegment des erweiterten Polygons 5 stellt die Überschneidungslinie 6 zwischen dem erweiterten Polygon 5 und dem landwirtschaftlichen Feld 1 dar.

Die so ermittelte Überschneidungslinie 6 repräsentiert die "Grenzlinie", bei deren Erreichen und Überschreiten automatisch eine wahlweise Abschaltung der Streuvorrichtung oder eine erfindungsgemäße Umschaltung der Streuvorrichtung auf eine für die Feldrandbehandlung geeignete Betriebsweise (Randstreuen) erfolgt. Um das Erreichen / Überschreiten der Überschneidungslinie 6 detektieren zu können und somit ein punktgenaues Ab- bzw. Umschalten zu gewährleisten, muss die Position des Fahrzeugs mit der angebrachten Streuvorrichtung jederzeit bekannt sein (beispielsweise mit Hilfe von GPS). Verlässt der Streufächer wieder den Feldrandbereich 11 zwischen Überschneidungslinie 6 und Gewässer 3a, 3b, d. h. ist der Abstand zwischen Streufächer und Gewässer 3a, 3b wieder größer als der gesetzlich vorgegebene Abstand a, dann erfolgt wahlweise ein Wiederanschalten der vormals abgeschalteten Streuvorrichtung (z. B. Wiederanschalten der Düngemittelzufuhr zur Schleuderscheibe und der Rotationsbewegung der Schleuderscheibe) bzw. erfindungsgemäß ein erneutes Umschalten der vormals auf Randstreuen geschalteten Streuvorrichtung auf eine Betriebsweise (Normalstreuen), die im Feldinneren eine optimale Düngemittelverteilung gewährleistet.

Wie oben im Hinblick auf Fig. 1 geschildert, enthält die zentrale Rechnereinheit 2 als Zusatztool 12 weitere Unterstützungsprogramme (wie beispielsweise die im Rahmen der Düngemittelapplikation bekannten Programme "Argus" oder "WindControl"). Die für diese Unterstützungsprogramme benötigten Eingabeparameter können vom Nutzer zusätzlich in das jeweilige Unterstützungsprogramm manuell eingegeben oder von einem Sensorsystem (z. B. einer mitgeführten Wetterstation) kontinuierlich erfasst und in die zentrale Rechnereinheit 2 hochgeladen werden. Das jeweilige Unterstützungsprogramm führt dann den hinterlegten Unterstützungsalgorithmus aus, um entsprechend den jeweiligen Eingabeparametern für ein optimales Streuergebnis (Streumenge / Streubild) zu sorgen.

Um jedoch eine Einhaltung der gesetzlichen Abstandsvorgaben zu Oberflächengewässern 3a, 3b in jedem Fall sicherzustellen, wird beim Einfahren des Streufächers in den Feldrandbereich 11 zwischen der Überschneidungslinie 6 und dem Gewässer 3a, 3b die durch das vorgeschilderte weitere Unterstützungsprogramm festgelegte Streugutverteilung (Streubreite / Streumenge) durch die von der gesetzlichen Abstandsvorgabe bestimmte Änderung der Betriebsweise der Streuvorrichtung (z. B. Umschaltung auf Randstreuen oder Komplett- / Teilabschaltung der Streuvorrichtung) überschrieben. Auf diese Weise wird auch bei der in Fig. 1 gezeigten Verwendung eines Zusatztools 12 ein Einhalten der gesetzlich vorgegebenen Abstandsvorgaben gewährleistet. Alle Informationen (Entscheidungsinformationen für Entscheidungstool 10 evtl. ergänzt durch Zusatzinformationen aus Zusatztool 12) sind vorhanden und müssen demnach lediglich abgerufen und noch in die zentrale Rechnereinheit 2 hochgeladen werden. Somit kann die Berechnung der Streugutverteilung und der dafür einzustellenden Betriebsparameter der Streuvorrichtung bereits in hocheffizienter Weise im Voraus vorgenommen werden.

Die in Fig. 4 und 5 dargestellte Ausführungsform des erfindungsgemäßen Verfahrens unterscheidet sich von der in Fig. 2 und 3 dargestellten Ausführungsform lediglich dahingehend, dass das mit einem Markierungspolygon 4 markierte Gewässer (Fig. 4: durch Flächenpolygon markiertes stehendes Gewässer 3a; Fig. 5: durch Linienpolygon markiertes fließendes Gewässer 3b) nicht nur um eine, sondern um zwei Abstandsvorgaben (Abstände a1 und a2) erweitert wurde. Als Ergebnis werden demzufolge jeweils zwei erweiterte Polygone 5a, 5b um das Gewässer 3a, 3b herum gebildet.

Das um den jeweils größeren Abstand a1 zum Gewässer ausgedehnte Polygon 5a überschneidet sich mit der zu bearbeitenden landwirtschaftlichen Feldfläche 1 entlang einer ersten Überschneidungslinie 6a. Diese erste Überschneidungslinie 6a repräsentiert eine erste Führungslinie, bei deren Erreichen und Unterschreiten auf Randstreuen umgeschaltet wird. Dank dieser vorbereitenden Umschaltung ist es möglich, das Düngemittel feldaußenseitig bis hart an die gesetzlich einzuhaltende (durch die zweite Überschneidungslinie 6b repräsentierte) Gewässerabstandsgrenze und gleichzeitig feldinnenseitig ungestört bis hinein in die nächste Feldfahrgasse auszustreuen.

Das Umschalten auf Randstreuen kann im Fall eines Schleuderstreuers wahlweise dadurch erfolgen, dass die zum Feldrand hin gerichtete Schleuderscheibe in ihrer Drehzahl z. B. durch ein Randstreugetriebe limitiert wird oder erfindungsgemäß dadurch, dass in den Streufächer der zum Feldrand hin gerichteten Schleuderscheibe entsprechende Leitelemente (z. B. Leitplatten) zum Abbremsen der ausgeschleuderten Düngerpartikel eingebracht werden. Die Umstellung von Normalstreuen auf Randstreuen und von Randstreuen zurück auf Normalstreuen erfolgt automatisch mittels des in der Rechnereinheit 2 installierten Entscheidungstools 10, wodurch vorteilhafterweise auf ein manuelles, allein auf Sicht kontrolliertes Umschalten durch den in der Fahrerkabine befindlichen Landwirt verzichtet werden kann.

Das um den jeweils geringeren Abstand a2 zum Gewässer 3a, 3b ausgedehnte Polygon 5b überschneidet sich mit der landwirtschaftlichen Feldfläche 1 entlang einer zweiten Überschneidungslinie 6b, die zwischen der ersten Überschneidungslinie 6a und dem Gewässer 3a, 3b angeordnet ist. Diese näher zum Gewässer befindliche zweite Überschneidungslinie 6b bildet eine zweite Führungslinie, bei deren Erreichen und Unterschreiten die relevanten Schleuderscheiben, also die Schleuderscheiben, deren Streufächer in den an das Gewässer 3a, 3b angrenzenden Feldrandbereich 11 eindringen, ganz abgeschaltet werden.

In dem in Fig. 4 und 5 dargestellten Ausführungsbeispiel sind somit vorteilhafterweise gleichzeitig zwei erweiterte Polygone 5a, 5b zur Bildung zweier "Grenzlinien" (Überschneidungslinien 6a, 6b) vorhanden, wobei die erste, sich weiter vom Gewässer entfernt befindende "Grenzlinie" (Überschneidungslinie 6a) zur Umschaltung der Streuvorrichtung von einer zur Feldinnenbehandlung geeigneten Betriebsweise (Normalstreuen) auf eine zur Feldrandbehandlung geeignete Betriebsweise (Randstreuen) dient, während die zweite, sich näher am Gewässer befindende "Grenzlinie" (Überschneidungslinie 6b) zur vollständigen oder teilweisen Abschaltung der Streuvorrichtung dient. Durch die vorbereitende Umschaltung auf Randstreuen kann zuverlässig verhindert werden, dass Düngemittel über die gesetzlich vorgegebene Abstandsgrenze zum Gewässer (gebildet durch die zweite, gewässernähere Überschneidungslinie 6b) abdriftet, wodurch eine Belastung des Gewässers 3a, 3b sicher ausgeschlossen werden kann.

Im Ergebnis wird durch das erfindungsgemäße Verfahren im Rahmen der Düngemittelapplikation eine präzise und automatisch von der Rechnereinheit 2 gesteuerte Einhaltung der gesetzlichen Abstandsvorgaben im Gewässerschutz ermöglicht, sodass kein manuelles, allein den Erfahrungswerten des Landwirtes überlassenes Ab- bzw. Umschalten der Düngerstreuvorrichtung mehr erforderlich ist und das Feld 1 somit in umweltschonender und dennoch hocheffizienter Weise bearbeitet werden kann.

## Patentansprüche

1. Verfahren zum Ausbringen von Düngemittel auf ein landwirtschaftliches Feld (1) mittels einer einem Fahrzeug zugeordneten Streuvorrichtung, wobei die Streuvorrichtung als Schleuderstreuer mit wenigstens zwei rotatorisch angetriebenen Schleuderscheiben ausgebildet ist, wobei das Düngemittel jeweils der rotierenden Schleuderscheibe aus einem Vorratsbehälter über wenigstens ein Dosierorgan dosiert aufgegeben wird, wobei während dem Ausbringen von Düngemittel Orts- bzw. Positionsdaten des Fahrzeugs insbesondere mittels eines Satellitennavigationssystems erfasst und an eine vorzugsweise als Bordcomputer ausgebildete Rechnereinheit (2) übermittelt werden, wobei Orts- bzw. Positionsdaten zumindest eines Gewässers (3a, 3b) in der Rechnereinheit (2) hinterlegt sind, wobei bei Erreichen und Unterschreiten eines vorgegebenen Abstandes (a, a1, a2) zwischen dem Streufächer der Streuvorrichtung und dem Gewässer die Betriebsweise der Streuvorrichtung von der Rechnereinheit (2) derart gesteuert bzw. geregelt wird, dass eine Anpassung und / oder Reduzierung des Ausbringens von Düngemittel durchgeführt wird, um das Gewässer (3a, 3b) nicht mit Düngemittel zu belasten, **dadurch gekennzeichnet, dass** die Streuvorrichtung mit einer Randstreueinrichtung ausgerüstet ist, welche als eine aus mehreren Leitplatten aufgebaute Abschirmung gestaltet ist, und dass bei Erreichen und Unterschreiten des vorgegebenen Abstandes (a, a1) zum Gewässer die Betriebsweise der Streuvorrichtung von Normalstreuen auf Randstreuen umgeschaltet wird und diese Randstreueinrichtung automatisch aktiviert wird.

2. Verfahren nach Anspruch 1, **dadurch gekennzeichnet, dass** bei Erreichen und Unterschreiten des vorgegebenen Abstandes (a, a1, a2) zum Gewässer (3a, 3b) durch die Randstreueinrichtung, welche als eine aus mehreren Leitplatten aufgebaute Abschirmung gestaltet ist, und eine Verstellung des Dosierorgans und / oder durch eine Verlagerung des Aufgabepunktes des Düngemittels auf die Schleuderscheibe ein in der Streumenge und / oder im Streubild angepasstes Ausbringen des Düngemittels erreicht wird, um das Gewässer (3a, 3b) nicht mit Düngemittel zu belasten.

3. Verfahren nach zumindest einem der vorstehenden Ansprüche, **dadurch gekennzeichnet, dass** in der Rechnereinheit (2) eine Applikationskarte (9) vorgegeben ist, in welcher das zu behandelnde landwirtschaftliche Feld (1) und die ausgebrachten und auszubringenden Düngemittelmengen abgespeichert sind.

4. Verfahren nach zumindest einem der vorstehenden Ansprüche, **dadurch gekennzeichnet, dass** es sich bei dem Gewässer (3a) um ein stehendes oder nahezu stehendes Gewässer, wie einen See oder einen Teich, handelt, der durch ein Flächenpolygon als Markierungspolygon (4) approximiert wird, oder dass es sich bei dem Gewässer (3b) um ein fließendes Gewässer, wie einen Fluss oder einen Bach, handelt, der durch ein Linienpolygon als Markierungspolygon (4) approximiert wird.

5. Verfahren nach zumindest einem der vorstehenden Ansprüche, **dadurch gekennzeichnet, dass** Profildaten des zu behandelnden Feldes (1), wie die Hangneigung, und / oder meteorologische Daten, wie die Windrichtung und / oder die Windstärke, in der Rechnereinheit (2) hinterlegt sind, um ein daran angepasstes Ausbringen von Düngemittel zu erreichen.

6. Verfahren nach zumindest einem der vorstehenden Ansprüche, **dadurch gekennzeichnet, dass** in der Rechnereinheit (2) wenigstens ein zusätzliches Unterstützungsprogramm installiert ist, welches auf Basis von in die Rechnereinheit (7) eingegebenen, geladenen oder eingelesenen Parametern die Streumenge und / oder das Streubild des Düngemittels neu einstellt und / oder verändert.

## Claims

1. Method for applying fertilizer to an agricultural field (1) by way of a spreading device associated with a vehicle, wherein the spreading device is designed as a centrifugal spreader having at least two rotationally driven centrifugal discs, wherein the fertilizer for each of the rotating centrifugal discs is applied in a metered manner from a storage tank by way of at least one metering element, wherein, during the application of fertilizer, location or position data of the vehicle are detected in particular by way of a satellite navigation system and are transmitted to a computer unit (2) that is preferably designed as an on-board computer, wherein location or position data of at least one body of water (3a, 3b) are stored in the computer unit (2), wherein, when a predefined distance (a, a1, a2) between the spread fan of the spreading device and the body of water is reached and undershot, the mode of operation of the spreading device is controlled or adjusted by the computer unit (2) such that the application of fertilizer is adjusted and/or reduced so as not to pollute the body of water (3a, 3b) with fertilizer, **characterized in that** the spreading device is equipped with an edge spreading apparatus that is configured as a shield constructed from a plurality of guide plates, and **in that**, when the predefined distance (a, a1) to the body of water is reached and undershot, the mode of operation of the spreading device is switched from normal spreading to edge spreading, and this edge spreading apparatus is automatically activated.

2. Method according to Claim 1, **characterized in that**, when the predefined distance (a, a1, a2) to the body of water (3a, 3b) is reached and undershot, by virtue of the edge spreading apparatus, which is configured as a shield constructed from a plurality of guide plates, and an adjustment of the metering element, and/or by virtue of shifting of the output point of the fertilizer on the centrifugal disc, an application of the fertilizer that is adjusted in terms of spreading amount and/or in terms of spreading pattern is achieved, so as not to pollute the body of water (3a, 3b) with fertilizer.

3. Method according to at least one of the preceding claims, **characterized in that** an application map (9) is predefined in the computer unit (2), in which application map the agricultural field (1) to be treated and the amounts of fertilizer that have been applied and that are to be applied are stored.

4. Method according to at least one of the preceding claims, **characterized in that** the body of water (3a) is a still or virtually still body of water, such as a lake or a pond, which is approximated as a marker polygon (4) by an area polygon, or **in that** the body of water (3b) is a flowing body of water, such as a river or a stream, which is approximated as a marker polygon (4) by a line polygon.

5. Method according to at least one of the preceding claims, **characterized in that** profile data on the field (1) to be treated, such as the gradient, and/or weather data, such as the wind direction and/or the wind speed, are stored in the computer unit (2) so as to achieve an application of fertilizer that is adapted thereto.

6. Method according to at least one of the preceding claims, **characterized in that** at least one additional assistive program is installed in the computer unit (2) and resets and/or changes the spreading amount and/or the spreading pattern of the fertilizer on the basis of parameters that are input, loaded or read into the computer unit (7).

## Revendications

1. Procédé d'épandage de substance fertilisante sur un champ agricole (1) au moyen d'un arrangement d'épandage associé à un véhicule, l'arrangement d'épandage étant réalisé sous la forme d'un épandeur centrifuge comprenant deux disques centrifuges entraînés en rotation, la substance fertilisante étant respectivement remise de manière dosée aux disques centrifuges en rotation depuis un réservoir par le biais d'au moins un organe de dosage, des données de lieu ou de position du véhicule étant acquises pendant l'épandage de la substance fertilisante, notamment au moyen d'un système de navigation par satellite et étant communiquées à une unité de calcul (2) de préférence réalisée sous la forme d'un ordinateur de bord,
les données de lieu ou de position d'au moins une masse d'eau (3a, 3b) étant stockées dans l'unité de calcul (2),
lorsqu'un écart prédéfini (a, a1, a2) entre l'éventail d'épandage de l'arrangement d'épandage et la masse d'eau est atteint et franchi vers le bas, le mode de fonctionnement de l'arrangement d'épandage étant commandé ou régulé par l'unité de calcul (2) de telle sorte qu'une adaptation et/ou une réduction de l'épandage de la substance fertilisante est effectuée afin de ne pas polluer la masse d'eau (3a, 3b) avec de la substance fertilisante,
**caractérisé en ce**
**que** l'arrangement d'épandage est équipé d'un dispositif d'épandage de bord qui est configuré sous la forme d'un écran protecteur constitué de plusieurs plaques de guidage,
et **en ce que**
lorsque l'écart prédéfini (a, a1, a2) par rapport à la masse d'eau est atteint et franchi vers le bas, le mode de fonctionnement de l'arrangement d'épandage est basculé de l'épandage normal à l'épandage de bord et ce dispositif d'épandage de bord est activé automatiquement.

2. Procédé selon la revendication 1, **caractérisé en ce que** lorsque l'écart prédéfini (a, a1, a2) par rapport à la masse d'eau (3a, 3b) est atteint et franchi vers le bas, au moyen du dispositif d'épandage de bord, lequel est configuré sous la forme d'un écran protecteur constitué de plusieurs plaques de guidage, et un positionnement de l'organe de dosage et/ou au moyen d'un décalage du point de remise de la substance fertilisante sur le disque centrifuge, un épandage de la substance fertilisante à la quantité d'épandage et/ou au profil d'épandage adapté est atteint afin de ne pas polluer la masse d'eau (3a, 3b) avec de la substance fertilisante.

3. Procédé selon au moins l'une des revendications précédentes, **caractérisé en ce qu'**une carte d'application (9) est prédéfinie dans l'unité de calcul (2), dans laquelle sont mémorisés le champ agricole (1) à traiter ainsi que les quantités de substance fertilisante épandues et à épandre.

4. Procédé selon au moins l'une des revendications précédentes, **caractérisé en ce que** la masse d'eau (3a) est un plan d'eau stagnant ou quasiment stagnant, tel qu'un lac ou un étang, lequel est défini approximativement par un polygone à surface en tant que polygone de marquage (4), et **en ce que** la masse d'eau (3b) est un cours d'eau à écoulement, tel qu'une rivière ou un ruisseau, qui est défini approximativement par un polygone à lignes en tant que polygone de marquage (4).

5. Procédé selon au moins l'une des revendications précédentes, **caractérisé en ce que** des données de profil du champ (1) à traiter, comme la pente, et/ou des données météorologiques, telles que la direction du vent et/ou la force du vent, sont stockées dans l'unité de calcul (2) afin d'obtenir un épandage de substance fertilisante qui y est adapté.

6. Procédé selon au moins l'une des revendications précédentes, **caractérisé en ce qu'**au moins un programme d'assistance supplémentaire est installé dans l'unité de calcul (2), lequel effectue un nouveau réglage et/ou modifie la quantité d'épandage et/ou le profil d'épandage sur la base de paramètres saisis, chargés ou lus dans l'unité de calcul (7).
